# DEMANDE DE BREVET EUROPEEN

(11) **EP 0 762 672 A2**
(43) Date de publication de la demande: **12.03.1997**
(21) Numéro de dépôt: 96401891.5
(22) Date de dépôt: 04.09.1996
(51) Int. Cl.: H04B 10/08, H04J 14/02

(54) **Dispositif de surveillance d'un signal optique de télécommunications spectralement multiplexé et agencement de transmission doté d'un tel dispositif**

(30) Priorité: 08.09.1995 FR 9510547
(71) Demandeur: ALCATEL N.V., NL-2288 BH Rijswijk (NL)
(72) Inventeur: Bayart, Dominique, 92140 Clamart (FR); Desthieux, Bertrand, 75014 Paris (FR)
(74) Mandataire: Fournier, Michel

(57) **Abrégé**

Le dispositif de surveillance comporte des moyens d'entrée (1) pour prélever par couplage une petite portion du signal optique spectralement multiplexé à surveiller, des moyens (11) pour extraire par filtrage la partie correspondant à chaque canal dans une portion de signal prélevée et des moyens (12), coopérant avec les moyens pour extraire par filtrage, pour mesurer le niveau de puissance optique par canal dans la portion de signal prélevée.

L'agencement comporte un dispositif de surveillance (0) auquel sont associés des moyens de commande (9) aptes à agir sur le signal optique spectralement multiplexé en fonction des mesures réalisées.

## Description

L'invention concerne un dispositif destiné à permettre une surveillance d'un signal optique de télécommunications spectralement multiplexé et les agencements de transmission équipés d'un tel dispositif.

La mise en exploitation de transmissions à haut débit par l'intermédiaire de réseaux de télécommunications dont les liaisons sont réalisées à l'aide de fibres optiques implique de disposer de moyens permettant de surveiller le fonctionnement des éléments constitutifs de ces réseaux de manière à pouvoir les commander efficacement.

Un document intitulé "Transparent switching node for optical frequency division multiplexed signal" de R.P. BRAUN & al qui a été publié le 13 Mai 1993, dans le numéro 10 du volume 29 de la revue "ELECTRONIC LETTERS", décrit un noeud de commutation doté de moyens de surveillance et de commande. Ce noeud assure la commutation de signaux optiques multiplexés en fréquence, il comporte une section de gestion de système qui permet de surveiller les spectres optiques, les composants et les fonctions de commutation du noeud. Cette section comporte un spectromètre hétérodyne à canaux multiples chargé de surveiller les spectres optiques en différents points du réseau de commutation du noeud et de régir en conséquence les fréquences porteuses exploitées pour la transmission. La section de gestion comporte aussi une unité de commande pour les filtres qui dispose d'un laser de balayage prévu pour émettre hors de la bande de transmission et pour balayer les caractéristiques périodiques des filtres exploités et pour permettre d'en stabiliser les positions en fréquence. Une surveillance simultanée et en conséquence une commande des fréquences porteuses et des courbes des filtres est ainsi obtenue.

Un autre document intitulé "Novel Supervisory Technique Using Wavelenght-Division-Multiplexed OTDR in EDFA Repeatered Transmission Systems" de Y.W. LAI & al qui a été publié dans le numéro 3 du volume 6 de Mars 1994 de la revue IEEE PHOTONICS TECHNOLOGY LETTERS, décrit une méthode de supervision pour transmission à longue distance employant des amplificateurs à fibre dopée à l'erbium. Ce document évoque plusieurs techniques de surveillance et en propose une permettant la surveillance des amplificateurs au moyen d'un signal hors bande exploité par réflectométrie optique à résolution dans le temps (OTDR).

Par contre les techniques et systèmes évoqués ci-dessus ne permettent pas de connaître les éventuels déséquilibres de puissance optique susceptibles d'exister entre canaux exploités par un même signal optique de télécommunications spectralement multiplexé. En effet ces canaux peuvent avoir des charges différentes par exemple en raison des différences de charge des sources qui les alimentent, comme cela est classique en matière de réseau multipoint de télécommunications où une même liaison entre deux noeuds peut transmettre un signal obtenu par juxtaposition de signaux reçus par l'un des noeuds de différentes manières et/ou sources. De plus les différents canaux exploités pour transmettre un même signal optique spectralement multiplexé ne sont pas nécessairement traités de manière strictement identique, par exemple, en l'absence de mesures particulières, les traitements et/ou réglages effectués en cours d'exploitation peuvent conduire à favoriser le ou les canaux à fort niveau de puissance au détriment de ceux qui n'ont qu'un niveau faible. Il y a alors un risque non négligeable de dégradation du signal spectralement multiplexé qu'il soit transmis ou à transmettre.

L'invention propose donc un dispositif destiné à permettre une surveillance d'un signal optique de télécommunications spectralement multiplexé en une pluralité de canaux distincts.

Selon une caractéristique de l'invention, ce dispositif comporte des moyens d'entrée pour prélever par couplage une petite portion du signal optique spectralement multiplexé, des moyens pour extraire par filtrage la partie correspondant à chaque canal dans une portion de signal prélevée et des moyens, coopérant avec les moyens pour extraire par filtrage, pour mesurer le niveau de puissance optique par canal dans la portion de signal prélevée. Selon une caractéristique d'une première variante de l'invention, le dispositif comporte des moyens d'entrée, du type coupleur optique à faible couplage, des moyens pour extraire par filtrage qui sont constitués par des filtres photoréfractifs ayant respectivement chacun une largeur de bande et une longueur d'onde centrale correspondant à la larguer de raie et à la longueur d'onde de l'un des différents canaux du signal optique spectralement multiplexé, des moyens pour mesurer les niveaux de puissance constitués par des photodétecteurs respectivement associés chacun à un des filtres photoréfractifs par l'intermédiaire d'un coupleur optique, les coupleurs optiques étant reliés en série à un premier d'entre eux qui est celui qui constitue les moyens d'entrée, de manière à permettre qu'une mesure de niveau de puissance soit obtenue par un des photodétecteurs pour chaque canal du signal optique spectralement multiplexé à partir d'une portion dudit signal prélevée par le coupleur constituant les moyens d'entrée. Selon une caractéristique d'une seconde variante de l'invention, le dispositif comporte des moyens d'entrée, du type coupleur optique à faible couplage, des moyens pour extraire par filtrage constitués par un filtre photoréfractif accordable, actif dans une bande de fréquences correspondant au moins à la largeur de raie d'un canal de signal optique spectralement multiplexé, et des moyens de commande d'accord du filtre permettant de faire varier la longueur d'onde centrale dudit filtre accordable dans une gamme de longueurs d'onde qui correspond à la largeur de bande occupée par le signal optique spectralement multiplexé, des moyens pour mesurer les niveaux de puissance constitués par un photodétecteur associé au filtre photoréfractif accordable par l'intermédiaire du coupleur optique qui constitue les moyens d'entrée et qui prélève une portion dudit signal optique spectralement multiplexé. L'invention propose également un agencement prévu pour permettre la transmission d'un signal optique spectralement multiplexé en une pluralité de canaux distincts, notamment de type liaison de transmission optique, multiplexeur optique, ou commutateur de réseau de télécommunications ou , équipé d'un dispositif de surveillance.

Selon une caractéristique de l'invention, cet agencement comporte un dispositif de surveillance connecté, par des moyens d'entrée permettant de prélever par couplage une petite portion du signal optique spectralement multiplexé, en un point de l'agencement par où transite un signal optique spectralement multiplexé à surveiller, ledit dispositif de surveillance comportant de plus des moyens pour extraire par filtrage la partie correspondant à chaque canal dans la portion de signal prélevée par les moyens d'entrée et des moyens, coopérant avec les moyens pour extraire par filtrage, pour mesurer par photodétection le niveau de puissance optique par canal dans la portion de signal prélevée, ledit agencement comportant de plus des moyens de commande aptes à agir sur le signal optique spectralement multiplexé en fonction des mesures réalisées par le dispositif de surveillance.

L'invention, ses caractéristiques et ses avantages sont précisés dans la description qui suit en liaison avec les figures évoquées ci-dessous.

La figure 1 présente un schéma d'un exemple d'agencement de transmission équipé d'un dispositif de surveillance de signal optique spectralement multiplexé selon l'invention.

La figure 2 présente un schéma d'un dispositif de surveillance selon l'invention.

La figure 3 présente un schéma relatif à une variante du dispositif de surveillance selon l'invention.

Comme il est connu de l'homme de métier, il existe différentes sortes d'agencement qui à des titres divers sont susceptibles d'intervenir dans la transmission d'un signal optique spectralement multiplexé, notamment pour le constituer, le modifier, le propager, le restituer.

Il existe au moins un point de passage de signal dans chacun de ces différents agencements où une surveillance peut permettre de déterminer au moins certaines des caractéristiques du signal passant en ce point de passage afin de vérifier si ces caractéristiques sont conformes à ce qui est prévu et d'agir en cas de dérive ou de défaut, lorsque cela est possible.

De tels points de passage sont par exemple respectivement situés en sortie d'un agencement de type émetteur ou de type multiplexeur, en entrée et/ou en sortie d'une liaison de transmission ou d'un agencement de type répéteur pour une telle liaison.

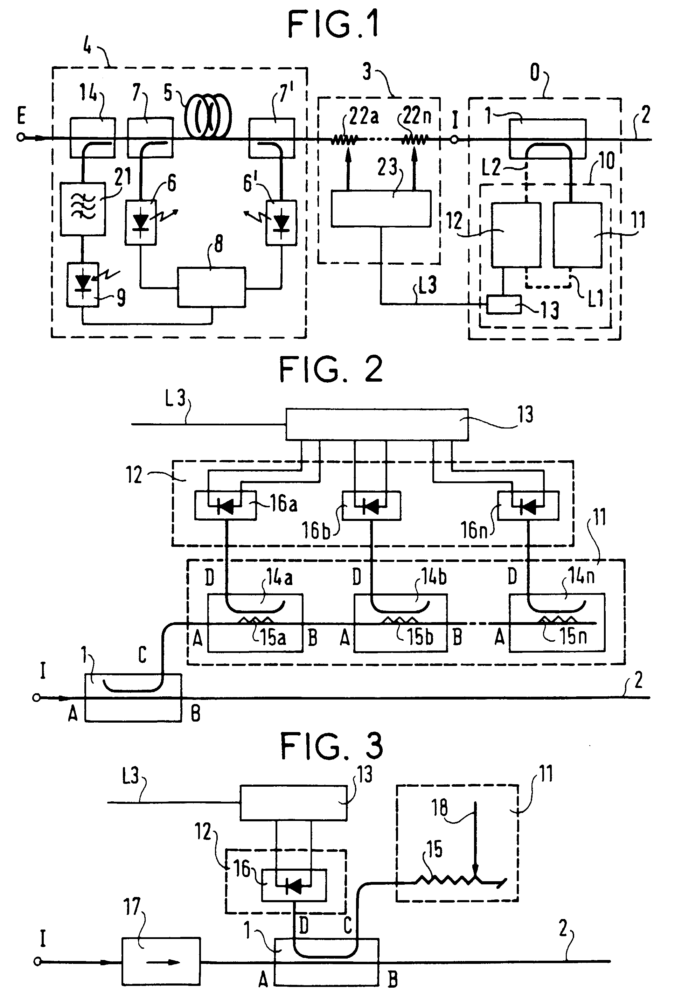

Dans l'exemple présenté sur la figure 1, il est montré un dispositif de surveillance 0, selon l'invention, connecté par un coupleur optique 1, en un point de passage "I" d'une liaison de transmission optique 2 qui transmet un signal optique de télécommunications spectralement multiplexé dans un nombre donné "n" de canaux distincts. Pour des raisons qui seront précisées plus loin, le point I est ici supposé en aval d'au moins un dispositif optique permettant d'agir sur le signal optique spectralement multiplexé transmis pour soit l'amplifier, soit pour l'atténuer.

Dans l'exemple proposé le point I est supposé situé en aval d'un dispositif atténuateur optique 3, lui-même situé en aval d'un amplificateur optique 4.

L'amplificateur optique 4 est par exemple du type décrit dans la demande de brevet français n°9400321. Il est alors constitué par une fibre dopée à l'erbium 5 apte à amplifier un signal optique spectralement multiplexé reçu à une entrée "E" en réponse à une action d'une source de pompe typiquement constituée par deux diodes laser 6 et 6' injectant deux ondes de pompe dans la fibre dopée à l'erbium par l'intermédiaire de deux multiplexeurs 7 et 7' respectivement situés de part et d'autre de la fibre dopée à l'erbium 5 sur le trajet suivi par le signal optique spectralement multiplexé. Un agencement de régulation 8 fournit un courant d'alimentation aux diodes laser 6 et 6' en fonction de signaux de commande destinés permettre une régénération du signal optique spectralement multiplexé par une amplification appropriée. Ceci est notamment destiné à permettre d'obtenir une puissance de sortie constante pour chacune des ondes porteuses spectralement multiplexées d'un signal optique de télécommunications reçu par l'amplificateur, lorsque la puissance d'entrée de ce signal évolue en raison de la variation du nombre d'ondes porteuses spectralement multiplexées alors que celles-ci ne varient pas en puissance, comme cela est classique dans ce cas. Dans l'exemple envisagé, les signaux de commande sont au moins en partie déduits de mesures fournies à l'agencement de régulation 8 par une diode photodétectrice 9 qui reçoit un signal optique de régulation fourni par un coupleur optique 14 et qui attaque sous forme électrique un montage amplificateur non représenté, ici supposé situé dans l'agencement de régulation 8.

Le coupleur optique 14 est ici supposé placé derrière l'entrée de l'amplificateur optique 3 qui est reliée au point E, il reçoit le signal optique de régulation qui est ici dû à une émission spontanée amplifiée dite contradirectionnelle se propageant en sens inverse du signal optique spectralement multiplexé. Un filtre optique 21 inséré entre le coupleur optique 14 et la diode photodétectrice 9 permet de délimiter la bande de fréquences à prendre en compte pour le signal optique de régulation. Dans un exemple de réalisation, où le domaine spectral occupé par le signal optique spectralement multiplexé s'étend entre 1530 et 1560 nm, la bande de régulation est prévue entre 1565 et 1570 nm environ.

Dans une forme préférée de réalisation, le dispositif atténuateur optique 3 comporte des filtres accordables 22, préférablement de type réseau photoréfractif, tels 22a, 22n, qui sont disposés en série entre une entrée et une sortie de ce dispositif et qui sont destinés à permettre d'atténuer individuellement chacun un canal. Cette atténuation est ici supposée obtenue en agissant sur le coefficient de transmission par décalage de la longueur d'onde de BRAGG du réseau photoréfractif d'un filtre, tel 22a, par rapport à la longueur d'onde centrale du canal dont le niveau de puissance est à réduire par l'intermédiaire de ce filtre.

Dans une forme préférée de réalisation, où le réseau photoréfractif de chaque filtre est réalisé par gravure sur au moins une structure guide d'onde optique, par exemple une fibre optique, où circule le signal optique spectralement multiplexé. Dans une forme préférée de réalisation les filtres sont répartis sur plusieurs structures guides d'onde, de manière à pouvoir aisément être accordés de manière séparée. Il est prévu de commander par voie mécanique ou éventuellement thermique l'accord de chacun des filtres 22a à 22n, en fonction des signaux fournis pour le dispositif de surveillance 0. Un agencement de conversion 23 reçoit alors les indications fournies par le dispositif de surveillance 0, sous forme électrique et agit en conséquence sur les filtres.

Cette action est susceptible d'être obtenue par déformation mécanique ou encore par modification de la température de la fibre au niveau des zones de fibre où sont réalisés les réseaux photoréfractifs. L'obtention d'une modification de la température d'une zone de fibre est susceptible d'être obtenue par mise en oeuvre de moyens bien connus de l'homme de métier.

Le dispositif de surveillance 0 selon l'invention prélève une petite portion du signal optique spectralement multiplexé transitant par la liaison de transmission optique 2 au niveau d'un point de passage I où sont disposés des moyens d'entrée que le dispositif comporte. Ces moyens d'entrée sont supposés constitués par le coupleur optique 1 déjà évoqué plus haut. Ce dernier transmet une majeure partie de l'ensemble du signal optique parvenant au point de passage I vers la partie de la liaison de transmission optique 2 située en aval par rapport à l'amplificateur optique 4 et ne prélève qu'une petite portion qui correspond par exemple à 1% du signal optique parvenu au point I, à destination d'un agencement de surveillance 10 proprement dit du dispositif de surveillance 0.

cet agencement de surveillance 10 comporte des moyens pour extraire par filtrage 11 qui reçoivent la portion de signal optique prélevée par le coupleur optique 1, afin d'extraire les parties de cette portion qui correspondent aux différents canaux du signal optique spectralement multiplexé. Il comporte aussi des moyens de mesure de puissance optique 12 chargés de définir le niveau de puissance optique pour chacun des canaux dont une partie a été obtenue par les moyens pour extraire par filtrage 11 de la portion de signal optique prélevée par le coupleur optique 1.

Les moyens de mesure de puissance 12 coopèrent avec les moyens pour extraire par filtrage 11 et avec le coupleur optique 1 des moyens d'entrée pour la mesure du niveau optique par canal. Ils sont susceptibles d'être optiquement reliés soit directement aux moyens pour extraire par filtrage 11, comme symbolisé par une liaison "L1" en tireté sur la figure 1, soit via le coupleur optique 1, comme symbolisé par une liaison "L2", ceci étant développé plus loin. Les moyens de mesure de puissance 12 sont bien entendu destinés à être associés à des moyens permettant d'exploiter les résultats des mesures qu'ils effectuent, notamment pour la supervision et la gestion de l'agencement de transmission auquel est affecté le dispositif de surveillance 0 considéré. Sur la figure 1, ceci est symbolisé par une liaison "L3" ici supposée de type électrique, permettant de transmettre les mesures, par exemple sous forme numérique, à l'agencement de régulation 8, depuis les moyens de mesure de puissance 12 et via une interface 13 de collecte et de mise en forme, pour la commande du dispositif atténuateur optique 3 en fonction des mesures effectuées par le dispositif de surveillance 0.

Un premier exemple d'un tel dispositif de surveillance est présenté en figure 2, il comporte un coupleur optique 1 présentant les caractéristiques de couplage définies plus haut. Ce coupleur optique 1 est par exemple du type de ceux qui sont réalisés par couplage entre les coeurs de deux fibres optiques qui sont polis ou fusionnés et tirés au niveau d'une zone où est réalisé le couplage.

Le coupleur optique 1 est connecté au niveau d'un point de passage "I" du signal optique spectralement multiplexé à surveiller, ce point étant par exemple situé en sortie d'un répéteur, non représenté, qui équipe une liaison de transmission 2. Il comporte donc deux accès l'un d'entrée A et l'autre de sortie B qui permettent de l'insérer en série sur la liaison de transmission 2 en aval du point "I" et de transférer par l'intermédiaire de l'accès de sortie B la majeure partie du signal optique spectralement multiplexé reçu du point "I" par l'accès d'entrée A. Un troisième accès C, dit de prélèvement, fournit la portion de signal que ce coupleur prélève de manière connue en soi sur le signal optique spectralement multiplexé qu'il reçoit par l'accès d'entrée A.

Comme indiqué plus haut, selon une forme préférée de réalisation, seule une petite portion de l'ensemble du signal optique spectralement multiplexé transmis par l'accès d'entrée A est prélevée par le coupleur optique 1 et produite par ce dernier au niveau de l'accès de prélèvement C.

Dans une première forme de réalisation, les moyens pour extraire par filtrage 11 du dispositif de surveillance selon l'invention comportent une pluralité de filtres sélectifs respectivement conçus chacun pour traiter l'un des différents canaux que comporte le signal optique spectralement multiplexé. Ces filtres sont par exemple de type photoréfractif et assurent donc chacun l'extraction et la réfraction d'un canal. Ce sont par exemple des filtres à réseau de BRAGG permettant de réfléchir chacun une onde ayant une longueur d'onde centrale comprise entre 1530 et 1560 nm, une largeur de raie de l'ordre de 0,1 à 0,5 nm pour des canaux identiquement espacés, cet espacement entre canaux correspondant à une valeur choisie par exemple entre 0,3 et 4 nm. Bien entendu ces valeurs sont données à titre indicatif et ne doivent pas être considérées comme limitatives.

Les filtres évoqués ci-dessus sont supposés recevoir la portion de signal optique provenant de l'accès de prélèvement C du coupleur optique 1 par l'intermédiaire de coupleurs optiques reliés en série à cet accès C, chaque filtre étant desservi par un coupleur.

Dans une forme préférée de réalisation, chaque filtre et le coupleur qui le dessert sont combinés en un module unique de type coupleur sélectif en longueur d'onde, tel que décrit dans la demande de brevet français n° 9412112, tels les coupleurs sélectifs 14a, 14b et 14n sur la figure 2. Chacun de ces coupleurs sélectifs est constitué d'un coupleur optique usuel, par exemple un coupleur à 100%, qui comporte un réseau de BRAGG au milieu de sa zone de couplage, tel le réseau 15a pour le coupleur sélectif 14a. Chaque coupleur sélectif comporte au moins un accès d'entrée A pour le signal reçu, un accès de sortie B pour le signal transmis et un accès, ici dit réflexif et référencé D, pour la sortie du signal réfléchi dont la longueur d'onde correspond à celle que sélectionne le coupleur sélectif considéré.

En effet, le réseau de BRAGG de chacun des coupleurs sélectifs en longueur d'onde 14a à 14n du dispositif de surveillance ici envisagé est conçu de manière connue de l'homme de métier pour être réfléchissant pour une longueur d'onde déterminée λr, qui est prévue différente pour chacun des coupleurs et qui est choisie pour correspondre à la longueur d'onde centrale d'un des différents canaux du signal optique spectralement multiplexé reçu par le coupleur optique 1.

Comme il est connu de l'homme de métier, un couplage à 100% est obtenu pour une longueur déterminée L de la zone de couplage, alors qu'un couplage à 3 dB est obtenu pour une longueur égale à L/2 et un couplage à 0% pour une longueur égale à 2L.

Comme le réseau de BRAGG d'un coupleur sélectif en longueur d'onde est au milieu de la zone de couplage de ce coupleur, la longueur du chemin optique parcouru par le signal réfléchi correspondant à un canal de longueur d'onde centrale λr vers l'accès réflexif D du coupleur est égale à la longueur du chemin optique parcouru par le signal optique spectralement multiplexé reçu de l'accès A et transmis depuis ce milieu de zone de couplage vers l'accès de sortie B. En conséquence 100% du signal optique correspondant au canal de longueur d'onde central λr contenu dans le signal optique spectralement multiplexé provenant par l'accès A est réfléchi vers l'accès réflexif D et, à l'exception de cette partie réfléchie, le reste du signal optique spectralement multiplexé est transmis à 100% vers l'accès de sortie B du coupleur considéré.

En conséquence, le dispositif de surveillance évoqué ci-dessus permet de réfléchir sélectivement les signaux optiques relatifs aux différents canaux que comporte le signal optique spectralement multiplexé par autant de coupleurs sélectifs en longueur d'onde, tels 14a à 14n, qui, disposés en série, traitent chacun le signal optique relatif à un canal différent.

Il est alors possible d'effectuer des mesures sur les signaux optiques fournis par les différents filtres photoréfractifs et en particulier des différents coupleurs sélectifs en longueur d'onde 14a à 14n d'un dispositif de surveillance selon l'invention tel qu'évoqué ci-dessus. Dans une forme préférée de réalisation, les moyens exploités pour effectuer des mesures sur ces signaux sont préférablement de type photodétecteur et permettent de mesurer le niveau de puissance optique obtenu pour chacun des signaux optiques individuellement réfléchis. Chaque photodétecteur, tel 16a, 16b ou 16n, fournit classiquement un signal traduisant sous forme électrique, le niveau de puissance optique du signal optique provenant d'un filtre photoréfractif qu'il reçoit.

Les signaux électriques de puissance obtenus des divers photodétecteurs sont classiquement collectés au niveau d'une interface 13 qui peut éventuellement permettre de les mettre en forme, de les traiter plus ou moins complètement et/ou de les transmettre à des fins d'exploitation immédiate ou ultérieure, suivant les besoins et comme il est connu par ailleurs.

Un autre exemple de dispositif de surveillance selon l'invention est présenté en figure 3, il comporte un coupleur optique 1 connecté comme précédemment au niveau d'un point de passage "I" du signal optique spectralement multiplexé à surveiller. Ce coupleur optique 1 présente pratiquement les caractéristiques de couplage initialement définies plus haut pour le coupleur 1 de la figure 2. Il reçoit le signal optique spectralement multiplexé à surveiller au niveau d'un accès d'entrée A, il en transmet la majeure partie par l'intermédiaire d'un accès d'entrée B et une petite portion par l'intermédiaire d'un accès de prélèvement C auquel se raccordent ici les moyens pour extraire par filtrage 11 du dispositif de surveillance qui le comporte. Il comporte aussi un accès réflexif D fonctionnellement analogue aux accès réflexifs D des coupleurs sélectifs en longueur d'onde de la figure 3.

Selon l'invention, les moyens pour extraire par filtrage 11 sont ici constitués par un unique filtre photoréfractif 15 qui est accordable à la demande. Ce filtre photoréfractif 15 est par exemple constitué par un filtre de BRAGG auxquels sont associés des moyens de commande 18 permettant de faire varier son accord, de manière à permettre le balayage des longueurs d'onde relatives aux différents canaux prévus pour le signal optique spectralement multiplexé reçu, par la longueur d'onde de BRAGG de ce filtre. Il permet donc de renvoyer vers le coupleur 1 et en fonction de la longueur d'onde de BRAGG alors sélectionnée, la partie de signal alors réfléchie par le filtre 15 qui provient de la portion de signal optique spectralement multiplexé transmise à ce filtre par le coupleur 1 via son accès de prélèvement C. Dans l'exemple non limitatif de réalisation envisagé sur la figure 3, un isolateur optique unidirectionnel 17 est inséré en amont de l'accès A par rapport au coupleur optique 1, il évite toute réflexion parasite en amont de ce coupleur d'une partie du signal réfléchi par le filtre 15, ce signal réfléchi étant transmis vers l'accès réflexif D. Les moyens de mesure de puissance 12 qui sont aussi supposés être du type photodétecteur sont reliés à cet accès réflexif D et ils sont ici supposés constitués par un seul photodétecteur 16 qui reçoit donc le signal optique réfléchi par le filtre 15 pour toute la gamme d'accord de ce dernier. Ce photodétecteur 16 mesure le niveau de puissance optique des signaux optiques qu'il reçoit avec des longueurs d'onde différentes au cours du balayage de la bande de fréquence couverte par le filtre au fur et à mesure de la variation de son accord, chaque signal optique reçu devant correspondre à un canal différent déterminé du signal optique spectralement multiplexé reçu par le coupleur 1 du dispositif de surveillance considéré.

Comme indiqué plus haut, le filtre 15 doit avoir une largeur de bande autour de chacune des fréquences centrales aux quelles il est susceptible d'être accordé qui correspond à la largeur de raie prévue par canal dans le signal optique spectralement multiplexé. Une interface 13 est aussi usuellement prévue pour collecter les signaux électriques de mesure de puissance successivement fournis par le photodétecteur 16 au fur et à mesure du balayage afin de les mettre en forme, de les traiter plus ou moins et/ou de les transmettre, notamment via la liaison "L3". Cette interface 13 peut aussi être équipée, de manière classique non représentée de moyens lui permettant de commander partiellement ou en totalité les balayages de la bande de fréquence à surveiller qu'effectue le filtre 15.

L'accord du filtre 15 est susceptible d'être obtenu sous l'action de moyens de commande 18 d'accord agissant de différentes manières, en particulier lorsque le réseau de BRAGG du filtre 15 a été réalisé par exemple par gravure sur une fibre optique de ce filtre.

Une variation d'accord peut ainsi être réalisée par une déformation de la fibre porteuse au niveau de la zone où se trouve le réseau de BRAGG du filtre. Cette déformation peut être obtenue par déformation mécanique ou encore par modification de la température de la fibre au niveau de la zone considérée ci-dessus. L'obtention d'une modification de la température est susceptible d'être obtenue par mise en oeuvre de moyens bien connus de l'homme de métier.

L'accord par déformation mécanique peut être obtenu par application d'une pression, par exemple au moyen d'un dispositif piézo-électrique dans la zone de fibre porteuse où se trouve le réseau de BRAGG constituant le filtre 15. L'accord par déformation mécanique peut également être obtenu par l'intermédiaire de moyens tels que définis dans la demande de brevet français n°9409705. En particulier un tel accord peut être obtenu par élongation de la longueur de fibre où est gravée le réseau de BRAGG du filtre 15, lorsque cette longueur est rendue solidaire d'un support qui est susceptible d'être soumis à des efforts de traction qui tendent à l'allonger et en conséquence à allonger la fibre et le pas du réseau de BRAGG qu'elle porte.

Un résultat analogue peut aussi être obtenu avec une fibre solidaire d'un support dont la cambrure est modifiée par application d'une pression mécanique transversale, cette variation de cambrure entraînant elle aussi une variation de l'allongement de la fibre et en conséquence une variation du pas du réseau de BRAGG gravé sur elle.

## Revendications

1. Dispositif de surveillance d'un signal optique de télécommunications spectralement multiplexé en une pluralité de canaux distincts, caractérisé en qu'il comporte des moyens d'entrée (1) pour prélever par couplage une petite portion du signal optique spectralement multiplexé à surveiller, des moyens (11) pour extraire par filtrage la partie correspondant à chaque canal dans une portion de signal prélevée et des moyens (12), coopérant avec les moyens pour extraire par filtrage, pour mesurer le niveau de puissance optique par canal dans la portion de signal prélevée.

2. Dispositif, selon la revendication 1, caractérisé en ce qu'il comporte des moyens d'entrée, du type coupleur optique à faible couplage, des moyens pour extraire par filtrage qui sont constitués par des filtres photoréfractifs (15a, 15b,..., 15n) ayant respectivement chacun une largeur de bande et une longueur d'onde centrale correspondant à la largeur de raie et à la longueur d'onde de l'un des différents canaux du signal optique spectralement multiplexé, des moyens pour mesurer les niveaux de puissance constitués par des photodétecteurs (16a, 16b,..., 16n) respectivement associés chacun à un des filtres photoréfractifs par l'intermédiaire d'un coupleur optique, les coupleurs optiques étant reliés en série à un premier d'entre eux qui est celui qui constitue les moyens d'entrée, de manière à permettre qu'une mesure de niveau de puissance soit obtenue par un des photodétecteurs pour chaque canal du signal optique spectralement multiplexé à partir d'une portion dudit signal prélevée par le coupleur (1) constituant les moyens d'entrée.

3. Dispositif, selon la revendication 2, caractérisé en ce qu'il comporte des coupleurs sélectifs en longueur d'onde (14a, 14b, ..., 14n) incorporant chacun un des filtres photoréfractifs (15a, 15b,..., 15n) constituant les moyens pour extraire par filtrage et le coupleur optique desservant ce filtre et permettant de l'associer à un photodétecteur (16a, 16b,..., 16n).

4. Dispositif, selon la revendication 1, caractérisé en ce qu'il comporte des moyens d'entrée, du type coupleur optique à faible couplage, des moyens pour extraire par filtrage constitués par un filtre photoréfractif accordable (15), actif dans une bande de fréquences correspondant au moins à la largeur de raie d'un canal de signal optique spectralement multiplexé, et des moyens de commande 18 d'accord 1 du filtre permettant de faire varier la longueur d'onde centrale dudit filtre accordable dans une gamme de longueurs d'onde qui correspond à la largeur de bande occupée par le signal optique spectralement multiplexé, des moyens pour mesurer les niveaux de puissance constitués par un photodétecteur (13) associé au filtre photoréfractif accordable par l'intermédiaire du coupleur optique (1) qui constitue les moyens d'entrée et qui prélève une portion dudit signal optique spectralement multiplexé.

5. Dispositif, selon la revendication 4, caractérisé en ce qu'il comporte un filtre photoréfractif accordable, de type filtre de BRAGG, qui est gravé sur une fibre optique et qui est accordable par déformation.

6. Dispositif, selon la revendication 5, caractérisé en ce qu'il comporte des moyens de commande (18) d'accord de filtre qui agissent par élongation de la fibre optique portant ce filtre.

7. Dispositif, selon la revendication 5, caractérisé en ce qu'il comporte des moyens de commande (18) d'accord de filtre qui agissent par application d'une pression mécanique sur la fibre optique qui porte ce filtre.

8. Dispositif, selon la revendication 7, caractérisé en ce qu'il comporte des moyens de commande (18) d'accord de filtre qui sont de type piézo-électrique pour appliquer dans la zone support de filtre la pression utilisée pour accorder ce filtre.

9. Dispositif, selon la revendication 5, caractérisé en ce qu'il comporte des moyens de commande (18) d'accord de filtre qui agissent par modification de température de la zone de fibre qui porte le filtre.

10. Agencement pour la transmission d'un signal optique spectralement multiplexé en une pluralité de canaux distincts, notamment susceptible de le constituer, de le modifier, de le propager et/ou de le restituer, caractérisé en ce qu'il comporte un dispositif de surveillance (0) connecté par des moyens d'entrée (1) permettant de prélever par couplage une petite portion d'un signal optique spectralement multiplexé, en un point de passage de l'agencement par où transite ce signal optique spectralement multiplexé, ledit dispositif de surveillance comportant des moyens (11) pour extraire par filtrage la partie correspondant à chaque canal dans la portion de signal prélevée par les moyens d'entrée et des moyens (12), coopérant avec les moyens pour extraire par filtrage, pour mesurer par photodétection le niveau de puissance optique par canal dans la portion de signal prélevée, ledit agencement comportant de plus des moyens de commande (9) aptes à agir sur le signal optique spectralement multiplexé en fonction des mesures réalisées par le dispositif de surveillance.
